# EUROPÄISCHE PATENTSCHRIFT

(11) **EP 2 011 421 B1**
(45) Veröffentlichungstag und Bekanntmachung des Hinweises auf die Patenterteilung: **14.07.2010**
(21) Anmeldenummer: 07111840.0
(22) Anmeldetag: 05.07.2007
(51) Int. Cl.: A47J 31/40

(54) **Vorrichtung zur Ausgabe von auf Milch basierenden Getränken**
Device for issuing milk-based drinks
Dispositif destiné à la production de boissons à base de lait

(43) Veröffentlichungstag der Anmeldung: 07.01.2009
(73) Patentinhaber: Schaerer AG, 4528 Zuchwil (CH)
(72) Erfinder: Lüssi, André, 3303, Jegenstorf (CH)
(74) Vertreter: BOVARD AG

(56) Entgegenhaltungen:
- EP-A- 0 850 586
- EP-A- 1 776 904

## Beschreibung

Die vorliegende Erfindung bezieht sich auf eine Vorrichtung zur Ausgabe von auf Milch basierenden Getränken, umfassend einen Milchbehälter, eine Pumpe zur Förderund der Milch vom Milchbehälter zu einem Milchauslass, Zuführmittel zum Zuführen von mindestens einem Aromastoff in die Milch und Mittel zum Mischen des mindestens einen Aromastoffes mit der Milch, einem in einem Gehäuse angeordneten kühlbaren Schrank, in welchen der Milchbehälter einsetzbar ist, wobei die Milch im Milchbehälter über eine Schlauchleitung, in welcher die Pumpe zur Förderung der Milch angeordnet ist, vom Milchbehälter in einer dosierbaren Menge in eine Mixvorrichtung überführbar ist, in welche durch die Zuführmittel mindestens ein Aromastoff dosiert zuführbar und mit der Milch vermischbar ist und das so erhaltene Mischgetränk über einen Auslass in ein unter diesem Auslass anbringbares Gefäss gelangt.

Vorrichtungen zur Herstellung von kalten Milchgetränken, denen Aromastoffe beigemischt werden, sind in vielfältiger Weise bekannt. Bekannt ist beispielsweise eine Einrichtung, bei welcher ein mit kalter Milch gefülltes Gefäss unter eine Ausgabe für Aromastoffe gehalten werden kann, welcher dann der Milch beigefügt wird, wobei gleichzeitig ein Rührwerk zur Vermischung des Aromastoffes mit der Milch in Funktion tritt. Damit kann ein aromatisiertes Milchgetränk in der gewünschten Qualität hergestellt werden, der Aufwand zur Herstellung dieses Milchgetränkes ist aber aufwändig.

Es sind auch Getränkeautomaten bekannt, aus welchen aromatisierte Milchgetränke fixfertig bezogen werden können. Hierbei wird aber als Basis Wasser verwendet, dem neben den Aromastoffen noch Milchpulver beigemischt wird um so ein aromatisiertes Milchgetränk erhalten zu können. Ein derartiges Getränk erfüllt aber höhere Anforderungen bezüglich Qualität eines Milchgetränkes nicht.

Aus der EP 0 850 586 A ist eine Einrichtung bekannt, aus welcher kalte Getränke bezogen werden können.

Aus der EP 1 776 904 A ist eine Einrichtung bekannt, welche warme Schokolade-Getränke liefern kann.

Die Aufgabe der vorliegenden Erfindung besteht somit darin, eine Vorrichtung zur Ausgabe von auf Milch basierenden Getränken zu schaffen, mit Hilfe welcher beispielsweise auf Knopfdruck neben fixfertig aromatisierten kalten Milchgetränken auch warme Milchgetränke geliefert werden können, deren Qualität hohe Anforderungen erfüllt, wobei die Vorrichtung einen einfachen Aufbau aufweisen soll, wodurch die Herstellung und der Unterhalt dieser Vorrichtung kostengünstig wird.

Erfindungsgemäss erfolgt die Lösung dieser Aufgabe dadurch, dass in die Schlauchleitung nach der Pumpe eine weitere Verzweigung eingesetzt ist, so dass die durch die Pumpe geförderte Milch über die abgezweigte Leitung in eine Emulgiereinrichtung gelangt, erwärmt und gegebenenfalls aufgeschäumt wird und in das unter der Auslassleitung stehende Gefäss leitbar ist.

Mit einer derartigen Vorrichtung kann in einfacher Weise ein aromatisiertes Milchgetränk hergestellt werden, welches die hohen Qualitätsanforderungen vollumfänglich erfüllt. Diese Vorrichtung lässt sich günstig herstellen, die Bedienung ist sehr einfach. Neben kalten Milchgetränken können auch warme Milchgetränke ausgegeben werden und bei Verwendung mit einer Kaffeemaschine können auch neben einfachem Milchkaffee Cappuccino und Caffè macchiato hergestellt werden.

In vorteilhafter Weise können die Aromastoffe in Pulverform über erste Zuführmittel oder in flüssiger Form über zweite Zuführmittel der Mixvorrichtung zugeführt werden. Dadurch können pulverförmige Aromastoffe oder flüssige Aromastoffe eingesetzt werden, je nach dem in welcher Form sich ein entsprechender Aromastoff am besten verwenden lässt.

In vorteilhafter Weise weist jedes erste Zuführmittel zur Zuführung von Aromastoffen in Pulverform einen auffüllbaren Behälter für die Aufnahme eines pulverförmigen Aromastoffes auf, welcher mit einem Auslass versehen ist, in welchem eine Dosiereinrichtung in Form eines Schneckenförderers angebracht ist, welcher motorisch antreibbar ist. Dadurch lässt sich die gewünschte Menge vom pulverförmigen Aromastoff in die Mixvorrichtung bringen.

In vorteilhafter Weise weist jedes zweite Zuführmittel zur Zuführung von Aromastoffen in flüssiger Form einen auffüllbaren und verschliessbaren Behälter für die Aufnahme eines in flüssiger Form vorliegenden Aromastoffes auf, welcher mit einer Ausflussleitung versehen ist, in welchen Behälter über eine Luftpumpe Luft zuführbar ist, durch welche der flüssige Aromastoff über die Ausflussleitung in die Mixvorrichtung pressbar ist. Auch dadurch lässt sich die Zuführung eines flüssigen Aromastoffes in einfacher Weise und in der gewünschten Dosismenge in die Mixvorrichtung zuführen.

Um eine Auswahl von Getränken mit unterschiedlichen Aromen aus der Vorrichtung beziehen zu können, ist diese in vorteilhafter Weise mit mehreren ersten Zuführmitteln zur Zuführung von pulverförmigen Aromastoffen- und/oder mehreren zweiten Zuführmitteln zur Zuführung von flüssigen Aromastoffen in die Mixvorrichtung ausgestattet.

Eine weitere vorteilhafte Ausgestaltung der Erfindung besteht darin, dass zwischen Milchbehälter und Pumpe in der Schlauchleitung eine Verzweigung angeordnet ist, dass über eine weitere Schlauchleitung in die Verzweigung und in die Schlauchleitung nach der Verzweigung Spülwasser oder ein Reinigungsmittel einbringbar ist, mittels welchem die Schlauchleitung, Pumpe und Mixvorrichtung reinigbar ist, und dass in der Schlauchleitung in Fliessrichtung der Milch vor der Verzweigung und in der weiteren Schlauchleitung in Fliessrichtung des Spülwassers oder des Reinigungsmittels vor der Verzweigung jeweils ein Schliessventil eingesetzt ist. Durch diese Ausgestaltung lässt sich die Vorrichtung einfach und automatisch reinigen.

In vorteilhafter Weise ist die Mixvorrichtung mit einer Aufnahme ausgestattet, in welche der pulverförmige oder flüssige Aromastoff mittels eines entsprechenden Gefässes von Hand einfüllbar ist. Dadurch können neben den vorgesehenen Aromastoffen in individueller Weise Getränke mit anderen Aromastoffen hergestellt werden.

Die Vorrichtung ist mit einer Steuereinheit ausgestattet, mit welcher Pumpe, Schliessventile, Dosiereinrichtungen, Luftpumpe und erforderliche Messmittel steuerbar sind, wodurch die Vorrichtung in automatischer Weise auf eine Befehlseingabe beispielsweise über Knopfdruck die gewünschte Menge Getränk mit dem gewünschten Aroma ausliefert.

Eine weitere vorteilhafte Ausgestaltung der Erfindung besteht darin, dass im Bereich des Auslasses eine Einrichtung angeordnet ist, mittels welcher portionenweise Eisschnee in das unter dem Auslass stehende Gefäss lieferbar ist, gesteuert über die Steuereinrichtung. Dadurch erhält man ein eisgekühltes aromatisiertes Milchgetränk.

Eine weitere vorteilhafte Ausgestaltung der Erfindung besteht darin, dass im Bereich der Mixvorrichtung eine Einrichtung zur Ausgabe von Speiseeis, insbesondere Softeis, angeordnet ist, mittels welcher portionenweise Eis in die Mixeinrichtung einbringbar und mit der zugeführten Milch vermischbar ist. Dadurch lässt sich zusätzlich ein Getränk herstellen, das unter dem Begriff "Frappé" bekannt ist. Diesem Getränk kann auch der gewünschte Aromastoff zugeführt werden.

Eine weitere vorteilhafte Ausgestaltung der Erfindung besteht darin, dass der Vorrichtung ein Zahlsystem zugeordnet ist, welchem ein Betrag in Form von Bargeld oder anderen Zahlmittel eingebbar ist, wonach ein Getränk aus der Vorrichtung ausgegeben wird. Dadurch kann diese Vorrichtung als Getränkeautomat, der von jedermann bedient werden kann, eingesetzt werden.

Eine weitere vorteilhafte Ausgestaltung der Erfindung besteht darin, dass diese mit einer Kaffeemaschine zusammenwirkt, deren Auslauf benachbart zum Auslauf der Vorrichtung angeordnet ist, so dass der von der Kaffeemaschine ausgebbare Kaffee in das unter diesen Auslässen gestellte Gefäss fliesst. Dadurch können neben kalten Milchgetränken aus dieser erweiterten Vorrichtung auch Kaffeegetränke bezogen werden.

Um die Milch in die gewünschte Schlauchleitung zu bringen, ist in vorteilhafter Weise nach der weiteren Verzweigung in die Schlauchleitung und in die abgezweigte Leitung jeweils ein weiteres Schliessventil eingesetzt, welche über die Steuerung ansteuerbar sind.

Ausführungsformen der vorliegenden Erfindung werden nachfolgend anhand der beiliegenden Zeichnung beispielhaft näher erläutert.

Es zeigt
Fig. 1 eine schematische Darstellung einer erfindungsgemässen Vorrichtung;
Fig. 2 eine schematische Darstellung der erfindungsgemässen Vorrichtung, welche mit einer Kaffeemaschine zusammenwirkt und in welcher ein Zahlsystem angeordnet ist;
Fig. 3 eine schematische Darstellung der erfindungsgemässen Vorrichtung, die mit einer Kaffeemaschine zusammenwirkt, und bei welcher die Milch zur Zubereitung von Kaffee aus dem Milchbehälter lieferbar ist;
Fig. 4 in schematischer Darstellung die Einrichtung zur Zubereitung von heisser und aufgeschäumter Milch;
Fig. 5 eine Schnittdarstellung der Emulgiervorrichtung.

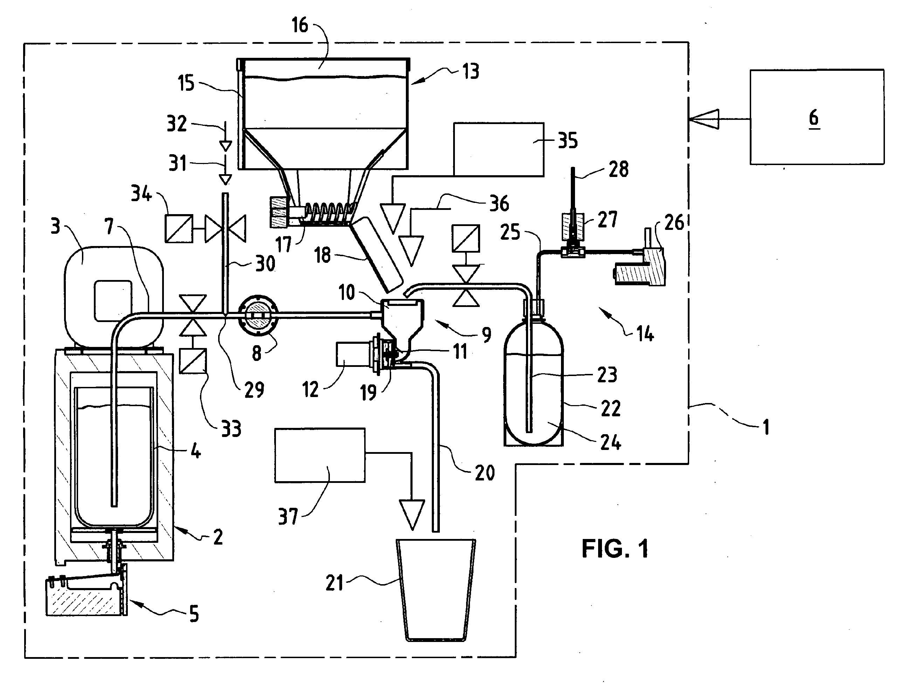

Wie aus der schematischen Darstellung gemäss Fig. 1 ersichtlich ist, ist in einem Gehäuse 1, das durch eine strichpunktierte Linie dargestellt ist, ein kühlbarer Schrank 2 angeordnet. Dieser kühlbare Schrank 2 ist in bekannter Weise mit einem Kühlaggregat 3 ausgestattet, die Wände dieses Schrankes sind isoliert und er weist eine verschliessbare Türe auf, welche eine Zugänglichkeit in den Innenraum ermöglicht. In diesen kühlbaren Schrank 2 ist ein Milchbehälter 4 einsetzbar. Dieser Milchbehälter 4 kommt auf ein in den kühlbaren Schrank 2 eingesetztes Wägesystem 5 zu stehen, durch die Wägung des Milchbehälters 3 kann in bekannter Weise der Füllstand dieses Behälters festgestellt werden, wenn der Behälter nahezu leer ist, kann ein Signal abgegeben werden, welches in bekannter nicht dargestellter Weise einer Steuereinheit 6 der Vorrichtung zugeleitet wird, wo signalisiert wird, dass ein neuer Milchbehälter einzusetzen ist.

In den Milchbehälter eingesetzt ist der eine Endbereich einer Schlauchleitung 7, welche Schlauchleitung 7 an eine Pumpe 8 angeschlossen ist. Diese Pumpe 8 kann Milch aus dem Milchbehälter 4 in eine Mixvorrichtung 9 fördern. Derartige Mixvorrichtungen sind bekannt, eine derartige Mixvorrichtung wird beispielsweise durch die Firma ... unter der Bezeichnung ... auf dem Markt angeboten. Diese Mixvorrichtung 9 weist eine Aufnahmekammer 10 auf, in welche die durch die Pumpe 8 geförderte Milch gelangt, wobei die Durchflussmenge in bekannter Weise gemessen und somit die Milchmenge pro Bezug eines Getränkes über die Steuereinheit 6 steuerbar ist. Im unteren Bereich dieser Aufnahmekammer ist ein Misch- und Pumpenrad 11 angeordnet, welches über einen Motor 12 antreibbar ist.

In die Aufnahmekammer 10 der Mixvorrichtung 9 kann ein Aromastoff zugeführt werden. Wie aus Fig. 1 ersichtlich ist, können hierzu erste Zuführmittel 13 und zweite Zuführmittel 14 eingesetzt werden. Jedes erste Zuführmittel ist mit einem Behälter 15 ausgestattet, in welchem ein pulverförmiger Aromastoff 16 eingefüllt werden kann. Der Behälter 15 ist an seinem unteren Ende trichterförmig ausgebildet, am Ende dieses Trichters ist eine Dosiereinrichtung in Form eines Schneckenförderers 17 angebracht, mit welchem der pulverförmige Aromastoff 16 auf eine Rutsche 18 gebracht werden kann, über welche der pulverförmige Aromastoff in die Aufnahmekammer 10 der Mixvorrichtung 9 gelangt. Die Dosierung der Zuführung des pulverförmigen Aromastoffes 16 in die Mixvorrichtung 9 erfolgt in bekannter Weise über die Steuereinheit 6, beispielsweise kann eine bestimmte Menge von pulverförmigem Aromastoff ausgegeben werden, indem der Schneckenförderer 17 während einer voreinstellbaren Zeitspanne rotiert.

Der pulverförmige Aromastoff 16 gelangt gleichzeitig mit der Milch in die Aufnahmekammer 10 der Mixvorrichtung 9, wird über das Misch- und Pumprad 11 in der Mischkammer 19 durchmischt und gelangt durch die Pumpwirkung in einen Auslass 20 und von dort in ein unter diesem Auslass aufgestelltes Gefäss 21.

Wenn anstelle von pulverförmigen Aromastoffen flüssige Aromastoffe der Milch beigefügt werden sollen, ist dies über die zweiten Zuführmittel 14 möglich. Diese zweiten Zuführmittel 14 bestehen jeweils aus einem verschliessbaren flaschenartigen Behälter 22, in welchen eine Schlauchleitung 23 eingesteckt ist. Diese Schlauchleitung 23 taucht in den flüssigen Aromastoff 24 hinein, der im flaschenartigen Behälter 22 eingefüllt ist. In den flaschenartigen Behälter 22 mündet auch eine Luftleitung 25, über welche aus einem Luftkompressor 26 in den flaschenartigen Behälter Druckluft zuführbar ist. Beim Zuführen von Luft in den flaschenartigen Behälter 22 wird der flüssige Aromastoff 24 über die Schlauchleitung 23 in die Aufnahmekammer 10 der Mixvorrichtung 9 gepresst und wird, wie vorgängig beschrieben worden ist, mit der zugeführten Milch vermischt. Zur Steuerung der zuführbaren Menge des flüssigen Aromastoffes 24 kann ein Ventil 27 vorgesehen sein, welches in der Luftleitung 25 eingesetzt ist, und welches über die Steuereinheit 6 in bekannter Weise geöffnet und geschlossen werden kann. Hierzu kann dieses Ventil 27 mit einer Entlüftungsleitung 28 ausgestattet sein, über welche der Druck im flaschenartigen Behälter 22 abgebaut werden kann. Selbstverständlich kann der Luftkompressor 26, gesteuert über die Steuereinheit 6, betätigt werden, wenn das Ventil 27 entsprechend geöffnet ist.

Mit dieser Vorrichtung können somit kalte Milchgetränke ausgegeben werden, die mit Aromastoffen unterschiedlichster Art, die auf dem Markt gebrauchsfertig angeboten werden, versehen sind. Diese Vorrichtung kann mit einer Anzahl von ersten Zuführmitteln für pulverförmige Aromastoffe ausgestattet sein, sie kann zusätzlich mit einer Anzahl von zweiten Zuführmitteln 14 zur Ausgabe von flüssigen Aromastoffen versehen sein, je nachdem wie viele und welche Aromastoffe der Milch beigefügt werden sollen. Die Steuereinheit 6 kann in bekannter Weise so ausgestattet sein, dass die verschiedenartigen Getränke über Tasten ausgewählt werden können, wonach die gewünschten dosierten Mengen durch die entsprechenden Mittel ausgegeben werden.

Diese Vorrichtung ist vorteilhafterweise auch mit einer bekannten Reinigungsvorrichtung ausgestattet, wie dies aus Fig. 1 ersichtlich ist. Hierzu weist die Schlauchleitung 7 zwischen dem Milchbehälter 4 und der Pumpe 8 eine Verzweigung 29 auf, in welche eine weitere Schlauchleitung 30 mündet. In diese weitere Schlauchleitung 30 ist in bekannter Weise heisses oder kaltes Spülwasser, dargestellt durch Pfeil 31 zuführbar, wodurch sich die Schlauchleitung 7, die Mixvorrichtung 9 und der Auslass 20 spülen lassen. Über die weitere Schlauchleitung 30 kann auch ein Reinigungsmittel zugeführt werden, dargestellt durch Pfeil 32, das die entsprechenden Leitungen und Elemente reinigt, danach kann mit Wasser nachgespült werden. Um diesen Spül- bzw. Reinigungsvorgang durchführen zu können, ist in der Schlauchleitung 7 ein Schliessventil 33 angeordnet, während in der weiteren Schlauchleitung 30 ein weiteres Schliessventil 34 vorgesehen ist. Diese Schliessventile 33 und 34 werden über die Steuereinheit 6 entsprechend geöffnet oder geschlossen, je nach Betriebsart der Vorrichtung.

Wie ebenfalls aus Fig. 1 ersichtlich ist, kann die Vorrichtung mit einer Einrichtung 35 zur Ausgabe von Speiseeis, insbesondere Softeis, ausgestattet sein. Über diese Einrichtung 35 lässt sich beispielsweise Softeis in die Aufnahmekammer 10 der Mixvorrichtung 9 bringen, während gleichzeitig Milch zugeführt wird. Dieses Softeis und die Milch werden, wie vorgängig beschrieben worden ist, gemischt und über den Auslass 20 in das darunterstehende Gefäss 21 ausgegeben. So erhält man ein Getränk, das unter dem Begriff "Frappé" bekannt ist. Diesem Getränk kann zusätzlich auch noch ein Aromamittel beigefügt werden, beispielsweise ein Fruchtaroma, so dass man ein Getränk mit Fruchtaroma erhalten kann.

Wie ebenfalls aus Fig. 1 ersichtlich ist, kann die Aufnahme 36 der Mixvorrichtung 9 so ausgestaltet sein, dass ein pulverförmiger oder flüssiger Aromastoff von Hand einfüllbar ist, beispielsweise mittels eines Löffels, dargestellt durch Pfeil 36. Dies kann beispielsweise zum Testen von verschiedenen Aromastoffen und den entsprechenden Getränken von Vorteil sein.

Ferner kann, wie ebenfalls aus Fig. 1 ersichtlich ist, im Bereich des Auslasses 20 eine Einrichtung 37 angeordnet sein, die in bekannter Weise Eisschnee in das unter dem Auslass 20 stehende Gefäss 21 liefert, gesteuert über die Steuereinheit 6.

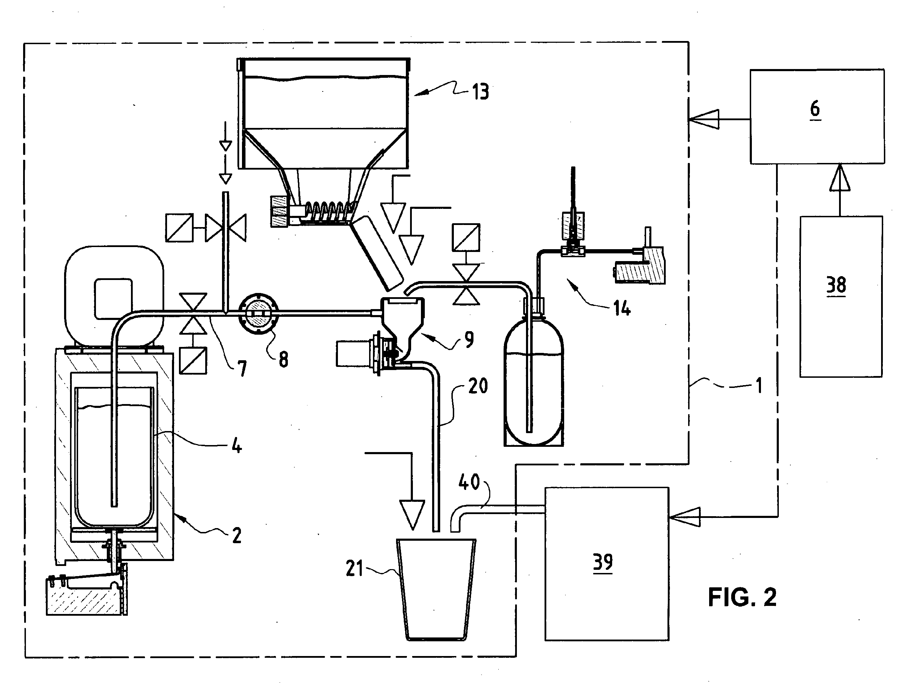

In Fig. 2 ist die gleiche Vorrichtung in schematischer Weise dargestellt, wie in Fig. 1, mit Gehäuse 1, kühlbarem Schrank 2, in den kühlbaren Schrank eingesetzter Milchbehälter 4, einer Schlauchleitung 7, mit Pumpe 8, mittels welcher die Milch aus dem Milchbehälter 4 in die Mixvorrichtung 9 bringbar ist, erste Zuführmittel 13 und zweite Zuführmittel 14 zum Zuführen von pulverförmigem oder flüssigem Aromastoff, dem Auslass 20, mittels welchem das Mischgetränk in das unter dem Auslass 20 angeordnete Gefäss 21 bringbar ist. Bei dieser Ausgestaltung ist der Steuereinheit 6 ein Zahlsystem 38 zugeordnet, welches so ausgestattet ist, dass diesem Zahlsystem 38 ein Betrag in Form von Bargeld oder anderen Zahlmitteln, beispielsweise über Zahlungskarten, Kreditkarten oder Abbuchungschips eingegeben werden, wodurch eine Freigabe zum Bezug eines Getränks erwirkt wird, wonach dann über die nicht dargestellten Eingabemittel in Form von Tasten in der Steuereinheit ein entsprechendes Getränk ausgewählt werden kann.

Zusätzlich kann dieser erfindungsgemässen Vorrichtung noch eine Kaffeemaschine 39 zugeordnet werden, die so angeordnet ist, dass der Auslass 40 für das Kaffeegetränk benachbart zum Auslass 20 für das Milchgetränk angeordnet ist, so dass sowohl für Milchgetränke wie auch für Kaffeegetränke das Gefäss 21 an eine einzige Ausgabestelle gestellt werden kann. Diese Kaffeemaschine 39 wird ebenfalls über die Steuereinheit 6 angesteuert, wozu zusätzliche Tasten für die Auswahl von Kaffeegetränken vorgesehen sind.

Es ist ohne weiteres denkbar, dass die erfindungsgemässe Vorrichtung für die Ausgabe von Milchgetränken und die Kaffeemaschine in ein und demselben Gehäuse untergebracht sind.

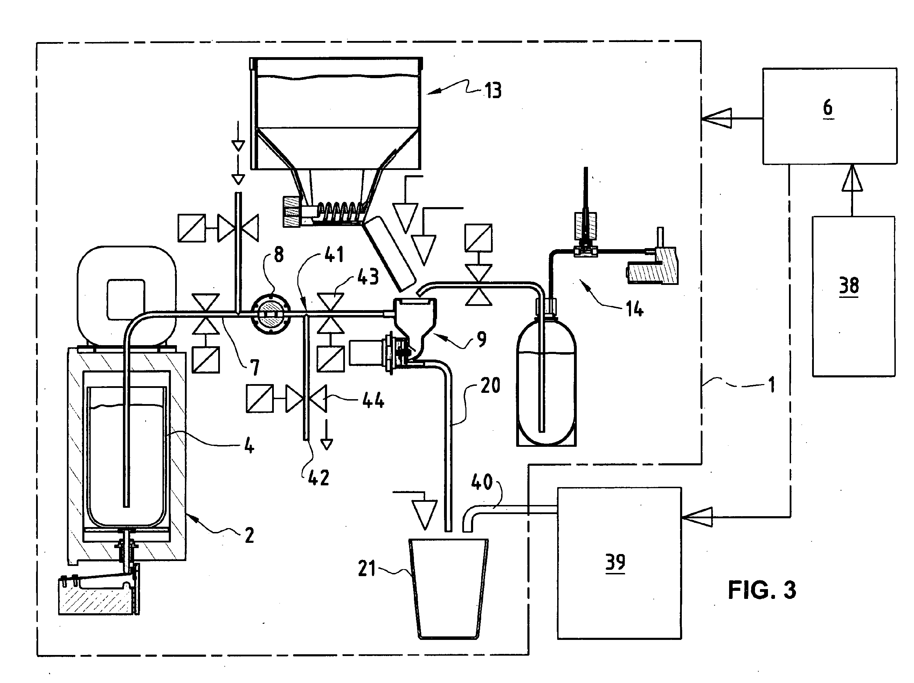

Fig. 3 zeigt in schematischer Darstellung die gleiche Vorrichtung, wie sie aus Fig. 2 ersichtlich ist, mit dem kühlbaren Schrank 2, dem in den kühlbaren Schrank 2 eingesetzten Milchbehälter 4, der Schlauchleitung 7, über welche die Pumpe 8 die Milch vom Milchbehälter 4 in die Mixvorrichtung 9 fördert, dem ersten Zuführmittel 13 und dem zweiten Zuführmittel 14 für die Zuführung von pulverförmigem oder flüssigem Aromastoff in die Mixvorrichtung 9, dem Auslass 20, das unter dem Auslass 20 angeordnete Gefäss 21, mit der Kaffeemaschine 39 und dem Auslass 40 der Kaffeemaschine für die Ausgabe von Kaffeegetränken. Bei dieser Ausgestaltung ist nach der Pumpe 8 in der Schlauchleitung 7 eine weitere Verzweigung 41 eingesetzt, so dass über diese abgezweigte Leitung 42 die durch die Pumpe 8 geförderte Milch abgezweigt werden kann, und zwar in eine Einrichtung, die nachfolgend noch im Detail beschrieben wird. Zur Umleitung der von der Pumpe 8 geförderten Milch von der Schlauchleitung 7 in die Mixvorrichtung 9 bzw. über die abgezweigte Leitung 42 ist jeweils nach der weiteren Verzweigung 41 ein Schliessventil 43, 44 vorgesehen, die über die Steuereinrichtung 6 in bekannter, nicht dargestellter Weise geschlossen und geöffnet werden können. Wenn die Milch in die Mixvorrichtung 9 gefördert werden soll, wird das Schliessventil 43 geöffnet, das Schliessventil 44 geschlossen, wenn die Milch in die abgezweigte Leitung 42 gefördert werden soll, wird das Schliessventil 43 geschlossen und das Schliessventil 44 geöffnet.

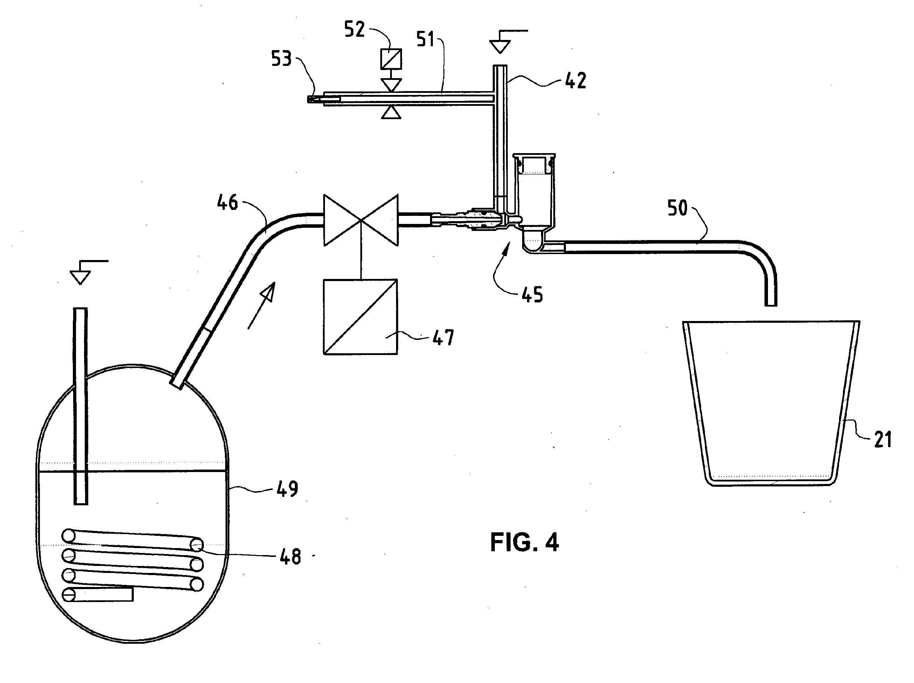

Wie aus Fig. 4 ersichtlich ist, führt die abgezweigte Leitung 42 in eine Emulgiervorrichtung 45. In diese Emulgiervorrichtung 45 wird Wasserdampf über die Leitung 46 und das entsprechende Schliessventil 47 zugeleitet, welcher Wasserdampf in bekannter Weise in einem mit einer Heizung 48 versehenen Boiler 49 erzeugt wird. Die über die abgezweigte Leitung 42 in die Emulgiervorrichtung 45 zugeführte Milch wird in dieser mit dem Dampf erhitzt, welcher über die Leitung 46 in die Emulgiervorrichtung 45 gebracht wird. Die so erhitzte Milch gelangt über die Auslassleitung 50 in das Gefäss 21, welches unter dieser Auslassleitung 50 gestellt werden kann. Diese Auslassleitung 50 wird benachbart zu den Auslassleitungen 20 und 40 (Fig. 2 und Fig. 3) angeordnet, so dass auch die über diese Auslassleitung 50 zugeführte Milch in das Gefäss 21 gelangt.

In die abgezweigte Leitung 42 mündet noch eine Luftleitung 51, welche ebenfalls über ein Schliessventil 52, das ebenfalls über die Steuereinheit 6 (Fig. 3) ansteuerbar ist, geschlossen und geöffnet werden kann, wobei am Ende dieser Luftleitung eine Düse 53 angeordnet ist. Die Luft wird dann der Milch zugeführt, wenn diese in der Emulgiervorrichtung 45 nicht nur erhitzt sondern auch aufgeschäumt werden soll, so dass beispielsweise aus der Auslassleitung 50 aufgeschäumte Milch zum Herstellen eines Cappuccinos ausfliessen kann.

Bei der Verwendung einer Einrichtung zur Zubereitung von heisser und geschäumter Milch ist es vorteilhaft, wenn die erfindungsgemässe Vorrichtung zur Ausgabe von kalten Milchgetränken, die Kaffeemaschine mit der entsprechenden Einrichtung zur Lieferung von heisser und geschäumter Milch in ein und demselben Gehäuse untergebracht sind und zentral über die Steuereinheit 6 gesteuert werden.

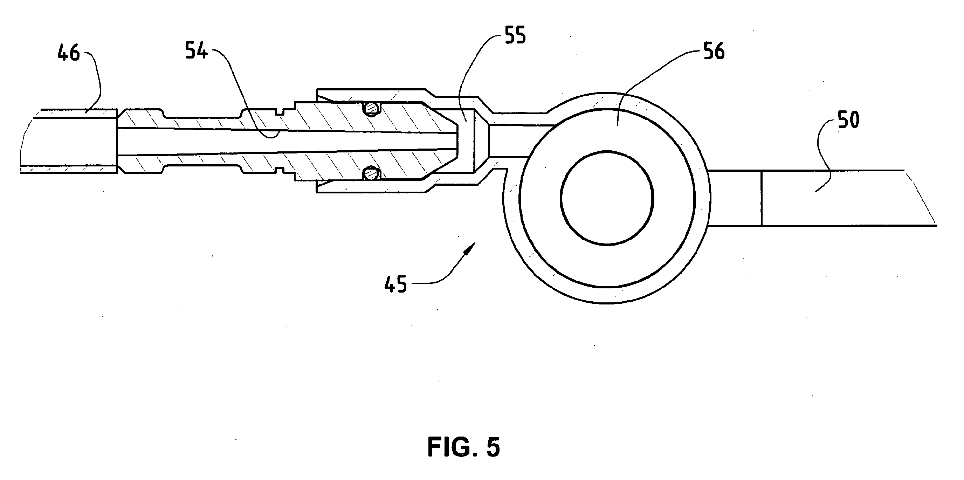

Fig. 5 zeigt im Schnitt den Aufbau einer bekannten Emulgiervorrichtung, der Dampf gelangt über die Leitung 46 und die Düse 54 in eine erste Kammer 55, in welcher die Milch und gegebenenfalls die Luft angesaugt wird und in die Verwirbelungskammer 56 gelangt, von wo die warme und gegebenenfalls geschäumte Milch in die Auslassleitung 50 gelangt.

Mit der erfindungsgemässen Vorrichtung wird ein Gerät erhalten, mit welchem verschiedenste Arten von Kaltmilchgetränken ausgegeben werden können, diese Vorrichtung kann so ausgebaut werden, dass zusätzlich noch jegliche Art von Kaffee produziert werden kann, mit Milch und/oder geschäumter Milch, so dass eine Vielzahl von unterschiedlichen Getränken geliefert werden kann. Eine derartige Maschine eignet sich insbesondere für Restaurationsbetriebe, sie kann aber auch als Getränkeautomat oder Teil von Getränkeautomaten vorgesehen sein.

## Patentansprüche

1. Vorrichtung zur Ausgabe von auf Milch basierenden Getränken, umfassend einen Milchbehälter (4), eine Pumpe (8) zur Förderung der Milch vom Milchbehälter (4) zu einem Milchauslass (20), Zuführmittel (13, 14) zum Zuführen von mindestens einem Aromastoff in die Milch und Mittel (9) zum Mischen des mindestens einen Aromastoffes mit der Milch, einem in einem Gehäuse (1) angeordneten kühlbaren Schrank (2), in welchen der Milchbehälter (4) einsetzbar ist, wobei die Milch im Milchbehälter (4) über eine Schlauchleitung (7), in welcher die Pumpe (8) zur Förderung der Milch angeordnet ist, vom Milchbehälter (4) in einer dosierbaren Menge in eine Mixvorrichtung (9) überführbar ist, in welche durch die Zuführmittel (13, 14) mindestens ein Aromastoff (16, 24) dosiert zuführbar und mit der Milch vermischbar ist und das so erhaltene Mischgetränk über einen Auslass (20) in ein unter diesem Auslass (20) anbringbares Gefäss (21) gelangt, **dadurch gekennzeichnet, dass** in die Schlauchleitung (7) nach der Pumpe (8) eine weitere Verzweigung (41) eingesetzt ist, so dass die durch die Pumpe (8) geförderte Milch über die abgezweigte Leitung (42) in eine Emulgiereinrichtung (45) gelangt, erwärmt und gegebenenfalls aufgeschäumt wird und in das unter der Auslassleitung (50) stehende Gefäss (21) leitbar ist.

2. Vorrichtung nach Anspruch 1 **dadurch gekennzeichnet, dass** die Aromastoffe in Pulverform über erste Zuführmittel (13) oder in flüssiger Form über zweite Zuführmittel (14) der Mixvorrichtung (9) zuführbar sind.

3. Vorrichtung nach Anspruch 2, **dadurch gekennzeichnet, dass** jedes erste Zuführmittel (13) zur Zuführung von Aromastoffen (16) in Pulverform einen auffüllbaren Behälter (15) für die Aufnahme eines pulverförmigen Aromastoffes (16) aufweist, welcher mit einem Auslass versehen ist, in welchem eine Dosiereinrichtung in Form eines Schneckenförders (17) angebracht ist, welcher motorisch antreibbar ist.

4. Vorrichtung nach Anspruch 2, **dadurch gekennzeichnet, dass** jedes zweite Zuführmittel (14) zur Zuführung von Aromastoffen (24) in flüssiger Form einen auffüllbaren und verschliessbaren Behälter (22) für die Aufnahme eines in flüssiger Form vorliegenden Aromastoffes (24) aufweist, welcher mit einer Ausflussleitung (23) versehen ist, in welchen Behälter (22) über eine Luftpumpe (26) Luft zuführbar ist, durch welche der flüssige Aromastoff (24) über die Ausflussleitung (23) in die Mixvorrichtung (9) pressbar ist.

5. Vorrichtung nach einem der Ansprüche 2 bis 4, **dadurch gekennzeichnet, dass** mehrere erste Zuführmittel (13) zur Zuführung von pulverförmigen Aromastoffen (16) und/oder mehrere zweite Zuführmittel (14) zur Zuführung von flüssigen Aromastoffen (24) in die Mixvorrichtung (9) anbringbar sind.

6. Vorrichtung nach einem der Ansprüche 1 bis 5, **dadurch gekennzeichnet, dass** zwischen Milchbehälter (4) und Pumpe (8) in der Schlauchleitung (7) eine Verzweigung (29) angeordnet ist, dass über eine weitere Schlauchleitung (30) in die Verzweigung (29) und in die Schlauchleitung (7) nach der Verzweigung (29) Spülwasser oder ein Reinigungsmittel einbringbar ist, mittels welchem die Schlauchleitung (7), Pumpe (8), Mixvorrichtung (9) und/oder Emulgiereinrichtung (45) reinigbar ist, und dass in der Schlauchleitung (7) in Fliessrichtung der Milch vor der Verzweigung (29) und in der weiteren Schlauchleitung (30) in Fliessrichtung des Spülwassers oder des Reinigungsmittels vor der Verzweigung (29) jeweils ein Schliessventil (33, 34) eingesetzt ist.

7. Vorrichtung nach einem der Ansprüche 1 bis 6, **dadurch gekennzeichnet, dass** die Mixvorrichtung (9) mit einer Aufnahme ausgestattet ist, in welche der pulverförmige oder flüssige Aromastoff mittels einem entsprechenden Gefäss von Hand einfüllbar ist.

8. Vorrichtung nach einem der Ansprüche 1 bis 7, **dadurch gekennzeichnet, dass** eine Steuereinheit (6) angebracht ist, mit welcher Pumpe (8), Schliessventile (33, 34), Dosiereinrichtungen (17), Luftpumpe (26) und erforderliche Messmittel zum Betrieb der Vorrichtung steuerbar sind.

9. Vorrichtung nach einem der Ansprüche 1 bis 8, **dadurch gekennzeichnet, dass** im Bereich des Auslasses (20) eine Einrichtung (37) angeordnet ist, mittels welcher portionenweise Eisschnee in das unter dem Auslass (20) stehende Gefäss (21) lieferbar ist, gesteuert über die Steuereinheit (6).

10. Vorrichtung nach einem der Ansprüche 1 bis 9, **dadurch gekennzeichnet, dass** im Bereich der Mixvorrichtung (9) eine Einrichtung (35) zur Ausgabe von Speiseeis, insbesondere Softeis, angeordnet ist, mittels welcher portionenweise Eis in die Mixeinrichtung (9) einbringbar und mit der zugeführten Milch vermischbar ist.

11. Vorrichtung nach einem der Ansprüche 1 bis 10, **dadurch gekennzeichnet, dass** ein Zahlsystem (38) vorgesehen ist, welchem ein Betrag in Form von Bargeld oder anderen Zahlmittein eingebbar ist, wonach ein Getränk aus der Vorrichtung ausgegeben wird.

12. Vorrichtung nach einem der Ansprüche 1 bis 11, **dadurch gekennzeichnet, dass** diese mit einer Kaffeemaschine (39) zusammenwirkt, deren Auslass (40) benachbart zum Auslass (20) der Vorrichtung angeordnet ist, so dass der von der Kaffeemaschine (39) ausgebbare Kaffe in das unter diesen beiden Auslässen (20, 40) gestellte Gefäss (21) fliesst.

13. Vorrichtung nach einem der Ansprüche 1 bis 12, **dadurch gekennzeichnet, dass** in die Schlauchleitung (7) nach der weiteren Verzweigung (41) und in die abgezweigte Leitung (42) jeweils ein weiteres Sperrventil (43, 44) eingesetzt ist, welche über die Steuerung (6) ansteuerbar sind.

## Claims

1. Apparatus for dispensing milk-based beverages, comprising a milk container (4), a pump (8) for conveying the milk from the milk container (4) to a milk outlet (20), supply means (13, 14) for supplying at least one flavouring agent to the milk, and means (9) for mixing of the at least one flavouring agent in the milk, a coolable cabinet (2) disposed in a housing (1), into which cabinet the milk container (4) is insertable, the milk in the milk container (4) being transferable from the milk container (4) into a mixing apparatus (9) in a quantity able to be metered via a hose line (7), in which the pump (8) for conveying the milk is disposed, into which mixing apparatus at least one flavouring agent (16, 24) is able to be supplied by the supply means (13, 14) in a metered way, and is able to be mixed with the milk, and the thus obtained mixed beverage reaches, via an outlet (20), a vessel (21), placeable under this outlet (20), **characterised in that** a further furcation (41) is included in the hose line (7) after the pump (8), so that the milk conveyed by the pump (8) reaches an emulsifying device (45) via the branched-off line (42), is heated and, if necessary, is frothed up, and is conveyable into the vessel (21) positioned under the discharge line (50).

2. Apparatus according to claim 1, **characterised in that** the flavouring agents are able to be supplied to the mixing apparatus (9) in powder form via first supply means (13) or in liquid form via second supply means (14).

3. Apparatus according to claim 2, **characterised in that** each first supply means (13) for supply of flavouring agents (16) in powder form has a fillable container (15) for receiving a flavouring agent (16) in powder form, which container is provided with an outlet in which a metering device is installed in the form of a feed screw (17), which is drivable by motor.

4. Apparatus according to claim 2, **characterised in that** each second supply means (14) for supply of flavouring agents (24) in liquid form has a fillable and closable container (22) for receiving a flavouring agent (24) provided in liquid form, which container is provided with an discharge line (23), into which container (22) air is able to be supplied via an air pump (26), by means of which the liquid flavouring agent (24) is able to be pushed through the discharge line (23) into the mixing apparatus (9).

5. Apparatus according to one of the claims 2 to 4, **characterised in that** a plurality of first supply means (13) for supply of flavouring agents (16) in powder form and/or a plurality of second supply means (14) for supply of flavouring agent (24) in liquid form are able to be attached to the mixing apparatus (9).

6. Apparatus according to one of the claims 1 to 5, **characterised in that** a furcation (29) is disposed in the hose line (7) between milk container (4) and pump (8), rinse water or a cleaning agent is able to be introduced into the furcation (29) and into the hose line (7) after the furcation (29) via a further hose line (30), by means of which the hose line (7), pump (8), mixing apparatus (9), and/or emulsifying device (45) is cleanable, and **in that** one closing valve (33, 34) each is provided in the hose line (7) before the furcation (29) in direction of flow of the milk and in the further hose line (30) before the furcation (29) in direction of flow of the rinse water or of the cleaning agent.

7. Apparatus according to one of the claims 1 to 6, **characterised in that** the mixing apparatus (9) is provided with a receptacle into which the flavouring agent in powder form or in liquid form is fillable by hand using a corresponding vessel.

8. Apparatus according to one of the claims 1 to 7, **characterised in that** a control unit (6) is provided by means of which pump (8), closing valve (33, 34), metering devices (17), air pump (26) and required measuring means are controllable for operation of the apparatus.

9. Apparatus according to one of the claims 1 to 8, **characterised in that** a device (37) is disposed in the region of the outlet (20), by means of which device finely crushed ice is able to be delivered in portions into the vessel (21) positioned under the outlet (20), controlled via the control unit (6).

10. Apparatus according to one of the claims 1 to 9, **characterised in that** a device (35) for dispensing ice cream, in particular soft ice cream, is disposed in the region of the mixing apparatus (9), by means of which device ice cream is able to be introduced in portions into the mixing apparatus (9) and is able to be mixed with the supplied milk.

11. Apparatus according to one of the claims 1 to 10, **characterised in that** a payment system (38) is provided into which an amount may be entered in the form of cash or other means of payment, whereupon a beverage is dispensed from the apparatus.

12. Apparatus according to one of the claims 1 to 11, **characterised in that** this apparatus co-operates with a coffee machine (39), whose outlet (40) is disposed adjacent to the outlet (20) of the apparatus, so that the coffee able to be dispensed from the coffee machine (39) flows into the vessel (21) placed under these two outlets (20, 40).

13. Apparatus according to one of the claims 1 to 12, **characterised in that** one further blocking valve (42) each is included in the hose line (7) after the further furcation (41) and in the branched-off line (42), which blocking valve is controllable via the control unit (6).

## Revendications

1. Dispositif distributeur de boissons lactées, comprenant un réservoir à lait (4), une pompe (8) pour le transport du lait depuis le réservoir à lait (4) à une sortie de lait (20), des moyens d'amenée (13, 14) pour amener au moins une substance aromatique dans le lait et des moyens pour le mélange d'au moins une substance aromatique dans le lait, une armoire réfrigérante (2) disposée dans un boîtier (1) dans laquelle peut être introduit le réservoir à lait (4), le lait dans le réservoir à lait (4) pouvant être transféré par l'intermédiaire d'un tuyau flexible (7), contenant la pompe (8) pour le transport du lait, entre le récipient à lait (4) dans une quantité dosée à un dispositif de mélange (9) dans lequel peut être amenée par les moyens d'amenée (13, 14) au moins une substance aromatique (16,24 ) de manière dosée et y être mélangée avec le lait et la boisson lactée ainsi obtenue parvenant par une sortie (20) dans un récipient (21) pouvant être placé sous cette sortie (20), **caractérisé en ce que** dans le tuyau flexible (7), il est introduit après la pompe (8) une autre ramification (41) de sorte que le lait transporté par la pompe (8) parvient par la ramification (42) dans un dispositif émulsionneur (45), est réchauffé et éventuellement moussé et peut être dirigé dans le récipient (21) se trouvant en dessous de la conduite de sortie (50).

2. Dispositif selon la revendication 1, **caractérisé en ce que** les substances aromatiques peuvent être amenées au dispositif de mélange (9) sous forme de poudre par des premiers moyens d'amenée (13) ou sous forme liquide par des seconds moyens d'amenée (14).

3. Dispositif selon la revendication 2, **caractérisé en ce que** chaque premier moyen d'amenée (13) pour l'amenée de substances aromatiques (16) sous forme de poudre présente un réservoir (15) remplissable pour la réception d'une substance aromatique (16) sous forme de poudre, réservoir qui est muni d'une sortie dans lequel est placé un dispositif de dosage sous forme d'une vis sans fin (17) motorisée.

4. Dispositif selon la revendication 2, **caractérisé en ce que** chaque second moyen d'amenée (14) pour l'amenée de substances aromatiques (24) sous forme liquide présente un réservoir remplissable et fermable (22) pour la réception d'une substance aromatique (24) sous forme liquide, réservoir qui est muni d'une conduite de sortie (23), réservoir (22) dans lequel de l'air peut être amené par une pompe à air (26) par laquelle peut être pressée la substance aromatique (24) dans le dispositif de mélange (9) par la conduite de sortie (23).

5. Dispositif selon l'une des revendications 2 à 4, **caractérisé en ce que** plusieurs premiers moyens d'amenée (13) pour l'amenée de substances aromatiques sous forme de poudre (16) et plusieurs seconds moyens d'amenée (14) pour l'amenée de substances aromatiques liquides (24) peuvent être placés dans le dispositif de mélange (9).

6. Dispositif selon l'une des revendications 1 à 5, **caractérisé en ce qu'**entre le réservoir à lait (4) et la pompe (8), il est disposé dans le tuyau flexible (7) une ramification (29), **en ce que** par un autre tuyau flexible(30), il peut être introduit dans la ramification (29) et dans le tuyau flexible (7) après la ramification (29), de l'eau de rinçage ou un agent nettoyant au moyen desquels il est possible de nettoyer le tuyau flexible (7), la pompe (8), le dispositif de mélange (9) et/ou le dispositif émulsionneur (45) et **en ce que** dans le tuyau flexible (7), respectivement une vanne de fermeture (33, 34) est introduite dans le sens d'écoulement du lait avant la ramification (29) et dans l'autre tuyau flexible (30) dans le sens d'écoulement de l'eau de rinçage ou de l'agent nettoyant devant la ramification (29).

7. Dispositif selon l'une des revendications 1 à 6, **caractérisé en ce que** le dispositif de mélange (9) est muni d'un logement qui peut être rempli manuellement d'une substance aromatique sous forme de poudre ou liquide au moyen d'un récipient correspondant.

8. Dispositif selon l'une des revendications 1 à 6, **caractérisé en ce que** pour le fonctionnement du dispositif, une unité de commande (6) est prévue qui commande la pompe (8), les vannes de fermeture (33, 34), les dispositifs de dosage (17), la pompe à air (26) et les moyens de mesure nécessaires.

9. Dispositif selon l'une des revendications 1 à 8, **caractérisé en ce que** dans la zone de la sortie (20), il est disposé un dispositif (37) au moyen duquel des portions de crème glacée fouettée peuvent être amenées dans le récipient (21) se trouvant en dessous de la sortie (20), de manière commandée par l'unité de commande (6).

10. Dispositif selon l'une des revendications 1 à 9, **caractérisé en ce que** dans la zone du dispositif de mélange (9), il est disposé un dispositif (35) pour la distribution de crème glacée, en particulier de la glace à l'italienne, dispositif au moyen duquel une portion de glace peut être introduite dans le dispositif de mélange (9) et être mélangée au lait amené.

11. Dispositif selon l'une des revendications 1 à 10, **caractérisé en ce qu'**un dispositif de paiement (38) est prévu qui peut recevoir un montant sous forme de pièces de monnaie ou autres moyens de paiement, permettant d'obtenir une boisson par le dispositif.

12. Dispositif selon l'une des revendications 1 à 11, **caractérisé en ce que** celui-ci coopère avec une machine à café (39) dont la sortie (40) est disposée à proximité de la sortie (20) du dispositif de sorte que le café distribué par la machine à café (39) s'écoule dans le récipient (21) placé sous ces deux sorties (20, 40).

13. Dispositif selon l'une des revendications 1 à 12, **caractérisé en ce que** il est introduit dans le tuyau flexible (7) après l'autre ramification (41) et dans le tuyau ramifié (42) respectivement une autre vanne de blocage (43, 44) pouvant être commandée par la commande (6).
